# EUROPÄISCHE PATENTSCHRIFT

(11) **EP 0 855 936 B1**
(45) Veröffentlichungstag und Bekanntmachung des Hinweises auf die Patenterteilung: **08.12.1999**
(21) Anmeldenummer: 96933406.9
(22) Anmeldetag: 26.09.1996
(51) Int. Cl.: B01J 35/04, B01J 35/02, F01N 3/28

(54) **WABENKÖRPER AUS BLECHLAGEN MIT VERSTÄRKUNGSSTRUKTUREN**
HONEYCOMB ELEMENT OF SHEET-METAL LAYERS WITH REINFORCEMENT FEATURES
CORPS ALVEOLE FORME DE COUCHES DE TOLE AVEC STRUCTURE RENFORCEE

(30) Priorität: 20.10.1995 DE 19539168
(43) Veröffentlichungstag der Anmeldung: 05.08.1998
(73) Patentinhaber: Emitec Gesellschaft für Emissionstechnologie mbH, 53797 Lohmar (DE)
(72) Erfinder: WIERES, Ludwig, D-51491 Overath (DE)
(74) Vertreter: Kahlhöfer, Hermann, Dipl.-Phys.
(86) Internationale Anmeldenummer: EP9604215
(87) Internationale Veröffentlichungsnummer: WO9715393

(56) Entgegenhaltungen:
- EP-A- 0 159 468
- EP-A- 0 348 576
- EP-A- 0 392 203

## Beschreibung

Die Erfindung betrifft einen Wabenkörper mit für ein Fluid von einer Stirnseite zur anderen durchlässigen Kanälen, insbesondere für einen katalytischen Reaktor für Abgase einer Verbrennungskraftmaschine eines Kraftfahrzeuges, aus strukturierten oder glatten und strukturierten, insbesondere gewellten, Blechlagen.

Wabenkörper aus Blechlagen der genannten Art sind beispielsweise aus der WO-89 07 488 bekannt. Dabei sind glatte und gewellte Bleche stapelweise abwechselnd aufeinandergeschichtet und verschlungen. Einige wenige der Blechlagen sind dicker ausgeführt als die übrigen. Die dickeren Blechlagen dienen zur Erhöhung der Stabilität des Stapels, insbesondere dann, wenn dieser in ein Mantelrohr eingefügt wird. Das Bereitstellen einzelner, unterschiedlich dicker Blechlagen in dem Stapel ist jedoch mit einem erhöhten Herstellungsaufwand verbunden.

In bestimmten Anwendungen eines Wabenkörpers ist das Bereitstellen von einzelnen dickeren Blechlagen zur Erhöhung der Stabilität nicht erforderlich. Weiterhin ist es grundsätzlich vorteilhaft, zur Reduzierung der Masse und der Kosten des Wabenkörpers, die Blechlagen so dünn wie möglich zu machen. Dieses Ziel steht jedoch im Gegensatz zum Ziel einer hohen Stabilität des Wabenkörpers und einer Langzeitbeständigkeit gegen Korrosion. Obwohl in den meisten Bereichen eines Wabenkörpers nur Belastungen auftreten, die auch von sehr dünnen Folien ausgehalten werden können, gibt es doch zwei Schwierigkeiten bei der Verwendung von Folien mit einer Dicke unter 40 µ, insbesondere z.B. etwa 30 µ. Einerseits ist die Herstellung und dabei besonders die mechanische Verbindung der Folien untereinander und/oder mit einem Mantelrohr bei dünnen Folien schwierig. Vor allem beim Löten oder Schweißen so dünner Folien entstehen sehr leicht Löcher. Andererseits sind die Stirnseiten solcher Wabenkörper im Betrieb besonderen mechanischen Belastungen durch pulsierende Strömungen und einer besonderen Korrosion und Erosion ausgesetzt.

Es gibt auch Anwendungsfälle für metallische Wabenkörper, z.B. bei Abgasreinigungsvorrichtungen in motorisierten Zweirädern, bei denen wegen hoher mechanischer und/oder korrosiver Belastungen bisher relativ dicke Folien mit einer Dicke zwischen 80 und 120 µ eingesetzt werden. Tatsächlich liegt dabei, wie Untersuchungen ergaben, die Belastung oft nur im stirnseitigen Bereich.

Es ist daher Aufgabe der Erfindung, einen Wabenkörper mit ausreichender Stabilität für verschiedene Anwendungsfälle und möglichst geringer Masse zu schaffen, der beständig gegen Korrosion und mechanisch stabil ist.

Diese Aufgabe wird erfindungsgemäß gelöst durch einen Wabenkörper mit den Merkmalen des Anspruchs 1 bzw. 9. Vorteilhafte Weiterbildungen und Ausgestaltungen dieses Wabenkörpers sind in den abhängigen Ansprüchen angegeben.

Ein Wabenkörper gemäß der Erfindung ist aus strukturierten oder abwechselnden im wesentlichen glatten und strukturierten Blechlagen aufgebaut. Die strukturierten Blechlagen sind vorzugsweise gewellt. Durch die abwechselnde Anordnung von im wesentlich glatten und strukturierten Blechlagen oder von unterschiedlich strukturierten Blechlagen werden Kanäle gebildet, die von einem Fluid von einer Stirnseite zur anderen durchströmt werden können. Der Wabenkörper eignet sich insbesondere für einen katalytischen Reaktor für Abgase einer Verbrennungskraftmaschine eines Kraftfahrzeuges. Die Wände der Kanäle des Wabenkörpers tragen dazu eine katalytische Beschichtung, die von den Abgasen der Verbrennungskraftmaschine angeströmt wird. Zumindest ein Teil der Blechlagen hat erfindungsgemäß eine Dicke von weniger als 40 µ, insbesondere etwa 30 µ.

Gewöhnlich haben alle Blechlagen eines Wabenkörpers eine bestimmte, gleiche Dicke von typischerweise etwa 40 bis 60 µ. Zur Reduzierung der Masse des Wabenkörpers wird gemäß der vorliegenden Erfindung die Dicke zumindest eines Teils der Blechlagen unter 40 µ reduziert, vorzugsweise die Dicke aller Blechlagen. Um trotzdem eine genügende mechanische Stabilität zu erreichen sind zumindest diejenigen Bleche, deren Dicke unter 40 µ liegt, mit zusätzlichen Verstärkungsstrukturen versehen.

Besonders wichtig sind solche Verstärkungsstrukturen im Bereich der Stirnseiten, wo die höchsten mechanischen Belastungen auftreten und wo bevorzugt die fügetechnischen Verbindungen der Blechlagen untereinander angebracht werden. Beim Löten kann es z.B. zu Auflegierungen des Grundmaterials durch Lot kommen, so daß bei sehr dünnem Grundmaterial starke Veränderungen der Eigenschaften entstehen können. Verstärkt man das Material in den zu lötenden Bereichen, so tritt dieses Problem nicht auf.

Besonders einfach läßt sich eine Verstärkung an den Stirnseiten durch Umfalzen der Ränder der Blechlagen erreichen. Dadurch wird in dem Umgefalzten Bereich die Dicke der Blechlagen verdoppelt, ohne daß sich die Masse des Wabenkörpers wesentlich erhöht oder seine sonstigen Eigenschaften negativ beeinflußt werden. Bei einer Anbindung der Umgefalzten Ränder an die benachbarten Blechlagen, beispielsweise durch Löten, kann sogar unter Umständen eine gewisse zusätzliche Elastizität des Wabenkörpers gegenüber thermischen Wechselbelastungen erreicht werden.

Umfalzungen können auch an den Enden derjenigen Bleche, die mit einem Mantelrohr fügetechnisch verbunden werden, von Vorteil sein. Auch hier ist eine Verstärkung bei der Herstellung haltbarer Verbindungen wichtig.

Besonders vorteilhaft ist es auch, wenn die strukturierten Blechlagen transversal zur Hauptstrukturierung eine zusätzliche Strukturierung aufweisen, wie sie beispielsweise in der EP 0 454 712 B1 beschrieben ist. Diese zusätzliche Strukturierung hat eine wesentlich kleinere Amplitude als die Hauptstrukturierung und dient ursprünglich zur Beeinflussung eines durch den Wabenkörper strömenden Fluids, um den Kontakt des Fluids mit den Wändden der Waben zu verbessern. Die erfindungsgemäß eingesetzten dünnen Bleche lassen sich sogar leichter transversal strukturieren und wellen als Bleche mit einer Dicke über 40 µ. Überrschenderweise verbessert eine solche Mikrostrukturierung auch die mechanischen Eigenschaften der dünnen Bleche, so daß unerwünschte Verformungen der Bleche während der Herstellung vermieden werden können. Dies gilt insbesondere für Mikrostrukturen, die in zwei sich kreuzenden Richtungen schräg zur Durchströmungsrichtung des Wabenkörpers verlaufen.

Mit der vorliegenden Erfindung werden in vorteilhafter Weise die Probleme für Anwendungsfälle mit hoher mechanischer und/oder korrosiver Belastung im stirnseitigen Bereich gelöst. Durch Umfalzen der Ränder zumindest eines Teils der Blechlagen an mindestens einer Stirnseite, vorzugsweise in einer Tiefe bzw. Breite b von 1 bis 10 mm, insbesondere 3 bis 5 mm, kann generell jede Folie unabhängig von ihrer Ausgangsdicke im Randbereich verstärkt werden. Insbesondere können aber für extreme Anwendungsfälle erfindungsgemäß dünnere Folien als bisher, dafür aber mit Verstärkungen im Randbereich eingesetzt werden.

Weitere Vorteile, Ausgestaltungen und Anwendungsmöglichkeiten der vorliegenden Erfindung ergeben sich aus der nachfolgenden Beschreibung von Ausführungsbeispielen in Verbindung mit der Zeichnung. Es zeigen:
- Fig. 1: einen Wabenkörper kurz vor seiner Fertigstellung,
- Fig. 2: eine quergeschnittene perspektivische Ansicht eines Stückes einer gewellten Blechlage und
- Fig. 3: einen schematischen Ausschnitt aus einem Wabenkörper zur Verdeutlichung gekreuzter Mikrostrukturen.

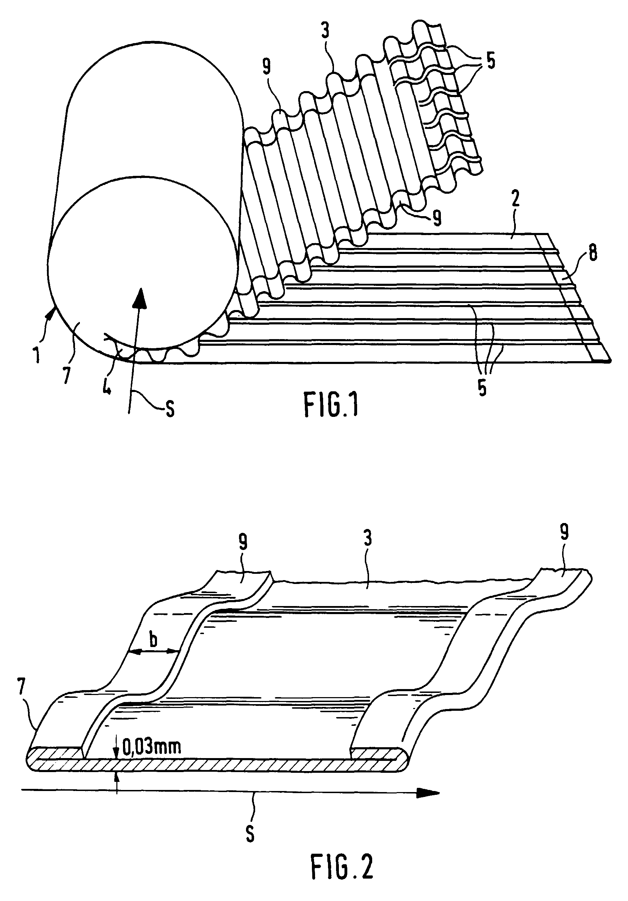

Figur 1 zeigt einen Wabenkörper in schematischer Darstellung kurz vor seiner Fertigstellung. Im vorliegenden Ausführungsbeispiel ist ein aus Blechlagen spiralförmig aufgewickelter Wabenkörper gezeigt, jedoch gelten die folgenden Ausführungen auch für andere Typen von Wabenkörpern, insbesondere solche mit S-förmig verschlungenen Blechlagen oder anderweitig gewickelte und geschichtete Wabenkörper. Der Wabenkörper 1 ist aus abwechselnd angeordneten glatten 2 und gewellten 3 Blechlagen aufgebaut. Die Wellstruktur der gewellten Blechlagen 3 führt beim fertigen Wabenkörper zu Kanälen 4, die in einer Strömungsrichtung S von einer Stirnseite 7 zur anderen von einem Abgas durchströmbar sind. Die gewellte Blechlage 3 und/oder die glatte Blechlage 2 können aus Folien mit einer Dicke unter 40 µ, insbesondere etwa 30 µ, gebildet sein. Zur Versteifung so dünner Folien ist es vorteilhaft, Mikrostrukturen 5 vorzusehen, welche eine Höhe bzw. Tiefe von z.B. 10 - 50 µ aufweisen können. Sie sind damit zwar wesentlich kleiner als die Dimensionen der Kanäle 4, jedoch in einer Größenordnung, die eine signifikante mechanische Verstärkung der dünnen Blechlagen 2, 3 bewirkt.

Alternativ und/oder additiv zu den Mikrostrukturen 5 können die Ränder der Blechlagen 2, 3 mit einer Breite b umgefalzt sein. Der umgefalzte Bereich 9 hat dann die doppelte Dicke, so daß die Randbereiche in ihrem Verhalten konventionellen Blechlagen etwa entsprechen. Insgesamt ergibt sich dadurch für die Handhabbarkeit der Bleche und die Möglichkeiten ihrer fügetechnischen Verbindungen eine Situation, die der bei herkömmlichen Wabenkörpern entspricht. Die umgefalzten Bleche können daher im übrigen nach bekannten Herstellungsmethoden verarbeitet werden. Die gleichen Vorteile lassen sich durch Umfalzen der Endbereiche 8 derjenigen Blechlagen 2, 3 erreichen, die an ein (hier nicht dargestelltes) Mantelrohr fügetechnisch angebunden werden sollen. Auch hier bewirkt das Umfalzen eine Situation, die der bei herkömmlichen Wabenkörpern entspricht, so daß übliche fügetechnische Verbindungen, wie z.B. Löten oder Schweißen, auch für die Anbindung dünner Blechlagen an ein Mantelrohr benutzt werden können.

Figur 2 zeigt in nicht maßstabgerechter Darstellung den prinzipiellen Aufbau eines erfindungsgemäß an den Rändern gefalzten gewellten Bleches 3. Die umgefalzten Randbereiche 9 bewirken auf einer Breite b eine Verstärkung, so daß die Stirnseiten 7 sowohl mechanisch, als auch in Bezug auf fügetechnische Verbindungen stabiler als die herkömmlicher Wabenkörper ohne Verstärkungen sind. So erhalten beispielsweise Folien einer Dicke von 30 µ fast die mechanischen Eigenschaften von 60 µ-Folie. Bei Folien von 50 µ kann eine Stabilität wie bisher bei etwa 100 µ Dicke erreicht werden. Gleichzeitig bleibt aber die Masse des gesamten Wabenkörpers relativ gering, so daß insbesondere das Kaltstartverhalten verbessert wird.

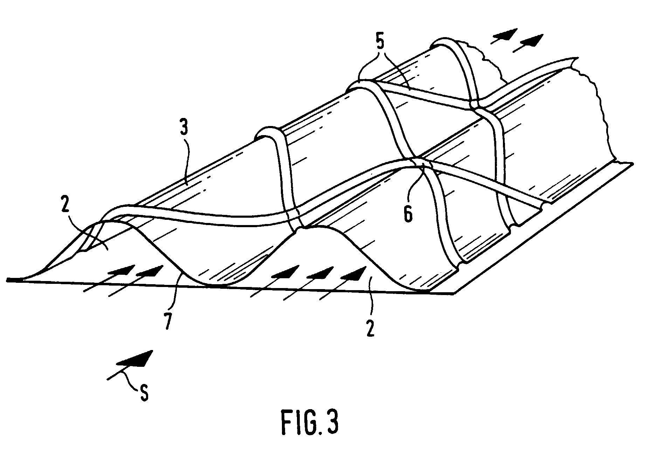

Figur 3 veranschaulicht den Verlauf von Mikrostrukturen 5, die so ausgebildet sind, daß sie sich in Kreuzungspunkten 6 überkreuzen. Der hier dargestellte Ausschnitt aus einem Wabenkörper zeigt ein gewelltes Blech 3 mit sich kreuzenden 6 Mikrostrukturen 5. Solche gekreuzten Mikrostrukturen haben nicht nur bei gewellten Blechen, sondern natürlich auch bei glatten Blechlagen 2 erhebliche Vorteile, da sie diesen Blechen eine erhöhte mechanische Steifigkeit verleihen, ohne jedoch ihre Flexibilität im Fertigungsablauf zu sehr einzuschränken.

Es sei darauf hingewiesen, daß die vorliegende Erfindung für die Anwendung bei allen bekannten aus Blechlagen aufgebauten Wabenkörpern geeignet ist, unabhängig davon, welche Bauform verwendet wird und welche Fügetechnik zur mechanischen Stabilisierung eingesetzt wird. Besonders vorteilhaft ist die Erfindung für Wabenkörper, die aus einem S-förmig verschlungenen Stapel von Blechlagen hergestellt sind. Außerdem eignet sich die Erfindung auch besonders gut für Wabenkörper die aus abwechselnden unterschiedlich gewellten Blechlagen aufgebaut sind.

Wabenkörper mit erfindungsgemäß verringerter Dicke zumindest eines Teils der Blechlagen und zusätzlichen Verstärkungsstrukturen eignen sich besonders für Anwendungen, bei denen keine extremen Korrosionsbeanspruchungen auftreten. Wabenkörper mit üblicher Blechdicke und Verstärkungsstrukturen eignen sich jetzt auch für Anwendungsfälle, in denen wegen hoher Belastungen bisher dickere Bleche eingesetzt wurden.

Bei Wabenkörpern, insbesondere solchen, die im motornahen Bereich eines Kraftfahrzeuges eingesetzt werden, kann es für das Verhalten in der Kaltstartphase und bei späteren Wiederstarts auf die axiale Verteilung der Masse ankommen. Auch dafür können Umfalzungen gezielt eingesetzt werden, um die Masse in Teilbereichen zu erhöhen oder nicht.

Die Umfalzungen erlauben es auch, in elektrisch beheizbaren Katalysatoren den elektrischen Widerstand, seine axiale Verteilung und die bei der elektrischen Beheizung entstehende Wärmeverteilung gezielt zu beeinflussen.

Gefalzte Blechlagen können dabei in vielen bekannten Bautypen für Heizkatalysatoren statt der üblichen Blechlagen eingesetzt werden, ohne daß sich am prinzipiellen Aufbau und am Herstellungsverfahren wesentliche Veränderungen ergeben. Bei durch Luftspalte elektrisch unterteilten Wabenkörpern tragen die gefalzten Bleche, die vorzugsweise bei allen Blechlagen eingesetzt werden, zur Stabilisierung bei und sind unempfindlich gegen mechanische Belastungen der Stirnseiten. Gleichzeitig bilden die umgefalzten Bereiche wegen der dort erzeugten (gegenüber den übrigen Bereichen verdoppelten) ohm'schen Wärme besonders heiße (axiale) Zonen, was für das schnelle Ansprechen des Katalysators sehr vorteilhaft sein kann.

### Bezugszeichenliste

- 1: Wabenkörper
- 2: glattes Blech
- 3: strukturiertes (gewelltes) Blech
- 4: Kanal
- 5: Mikrostruktur
- 6: Kreuzungspunkt von Mikrostrukturen
- 7: Stirnseite
- 8: gefalzter Endbereich
- 9: gefalzter Randbereich
- S: Durchströmungsrichtung
- b: Falzbreite

## Patentansprüche

1. Wabenkörper (1) mit für ein Fluid von einer Stirnseite (7) zur anderen durchlässigen Kanälen (4), insbesondere für einen katalytischen Reaktor für Abgase einer Verbrennungskraftmaschine eines Kraftfahrzeugs, aus strukturierten (3) oder glatten (2) und strukturierten (3) Blechlagen, wobei mindestens ein Teil der Blechlagen (2, 3) eine Dicke von weniger als 40 µ, vorzugsweise etwa 30 µ aufweist,
dadurch gekennzeichnet, daß
zumindest ein Teil der Blechlagen (2, 3) mit einer Dicke von weniger als 40 µ in Teilbereichen mit zusätzlichen Verstärkungsstrukturen (5, 6, 8, 9) versehen ist.

2. Wabenkörper nach Anspruch 1,
dadurch gekennzeichnet, daß
die zusätzlichen Verstärkungsstrukturen (9) im Bereich von einer oder beiden Stirnseiten (7) des Wabenkörpers (1) angeordnet sind, vorzugsweise bis zu einer Tiefe (b) von 1 bis 10 mm, vorzugsweise etwa 3 bis 5 mm, von den Stirnseiten (7).

3. Wabenkörper nach Anspruch 1 oder 2,
dadurch gekennzeichnet, daß
die zusätzlichen Verstärkungsstrukturen Umfalzungen (9) der Ränder der Blechlagen (2, 3) sind.

4. Wabenkörper nach einem der Ansprüche 1 bis 3,
dadurch gekennzeichnet,
daß die Bleche (2, 3) durch Löten zumindest an einem Teil ihrer Berührungsstellen miteinander verbunden sind, und zwar vorzugsweise in den Bereichen der zusätzlichen Verstärkungsstrukturen (9).

5. Wabenkörper nach einem der vorhergehenden Ansprüche, wobei zumindest ein Teil der Blechlagen (2, 3) mit ihren Enden mit einem den Wabenkörper (1) umgebenden Mantelrohr verbunden ist, vorzugsweise verschweißt oder verlötet,
dadurch gekennzeichnet, daß diese Enden der Bleche (2, 3) mit Verstärkungsstrukturen (8) versehen sind.

6. Wabenkörper nach Anspruch 5,
dadurch gekennzeichnet, daß die Enden der mit dem Mantelrohr verbundenen Bleche (2, 3) in einem Bereich von 1 bis 10 mm, vorzugsweise etwa 3 bis 5 mm umgefalzt (8) sind.

7. Wabenkörper nach einem der vorhergehenden Ansprüche,
dadurch gekennzeichnet,
daß zumindest ein Teil der Bleche (2, 3) zumindest in Teilbereichen Mikrostrukturen (5, 6), vorzugsweise mit einer Höhe oder Tiefe von 10 bis 50 µ, als Verstärkungsstrukturen aufweist, insbesondere sich kreuzende (6) Mikrostrukturen.

8. Wabenkörper nach einem der vorhergehenden Ansprüche,
dadurch gekennzeichnet, daß
der Wabenkörper glatte Blechlagen (2) einer ersten Dicke und strukturierte Blechlagen (3) einer zweiten Dicke enthält, wobei alle strukturierten Blechlagen (3) um mindestens 5 µ, vorzugsweise 10 µ, dünner als die glatten Blechlagen (2) sind.

## Claims

1. A honeycomb body (1) with passages (4) through which a fluid can pass from one end (7) to the other, in particular for a catalytic reactor for exhaust gases of an internal combustion engine of a motor vehicle, comprising structured (3) or smooth (2) and structured (3) sheet metal layers, wherein a part of the sheet metal layers (2, 3) is of a thickness of less than 40 µ, preferably about 30 µ characterised in that at least a part of the sheet metal layers (2, 3) of a thickness of less than 40 **ii** is provided in portions thereof with additional reinforcing structures (5, 6, 8, 9).

2. A honeycomb body according to claim 1 characterised in that the additional reinforcing structures (9) are arranged in the region of one or both ends (7) of the honeycomb body (1), preferably to a depth (b)of from 1 to 10 am, preferably about 3 to 5 mm, from the ends (7).

3. A honeycomb body according to claim 1 or claim 2 characterised in that the additional reinforcing structures are bent-over portions (9) of the edges of the sheet metal layers (2, 3). .

4. A honeycomb body according to one of claims 1 to 3 characterised in that the sheet metal layers (2, 3) are joined together by soldering at least at a part of their contact locations, more specifically preferably in the regions of the additional reinforcing structures (9).

5. A honeycomb body according to one of the preceding claims wherein at least a part of the sheet metal layers (2, 3) is connected with their ends to a tubular casing surrounding the honeycomb body (1), preferably by welding or soldering, characterised in that said ends of the metal sheets (2, 3) are provided with reinforcing structures (8).

6. A honeycomb body according to claim 5 characterised in that the ends of the metal sheets (2, 3) which are connected to the tubular casing are bent over (8) in a region of from 1 to 10 mm, preferably about 3 to 5 mm.

7. A honeycomb body according to one of the preceding claims characterised in that at least a part of the metal sheets (2, 3), at least in portions thereof, has microstructures (5, 6), preferably of a height or depth of from 10 to 50 u, as reinforcing structures, in particular mutually crossing (6) microstructures.

8. A honeycomb body according to one of the preceding claims characterised in that the honeycomb body includes smooth sheet metal layers (2) of a first thickness and structured sheet metal layers (3) of a second thickness, wherein all structured sheet metal layers (3) are thinner than the smooth sheet metal layers (2) by at least 5 U, preferably 10 µ.

## Revendications

1. Corps alvéolaire (1) comportant des canaux (4) pouvant être traversés d'une face frontale (7) vers l'autre par un fluide, destiné notamment à un réacteur catalytique de gaz d'échappement d'un moteur à combustion interne d'un véhicule automobile, constitué de couches de tôles structurées (3), ou lisses (2) et structurées (3), une partie au moins des couches de tôles (2, 3) ayant une épaisseur inférieure à 40 µ, de préférence de l'ordre de 30 µ,
caractérisé en ce que
une partie au moins des couches de tôles (2, 3) d'une épaisseur inférieure à 40 µ est munie dans des zones partielles de structures de renforcement supplémentaires (5, 6, 8, 9).

2. Corps alvéolaire selon la revendication 1,
caractérisé en ce que
les structures de renforcement supplémentaires (9) sont disposées dans la zone de l'une ou des deux faces frontales (7) du corps alvéolaire (1), de préférence jusqu'à une profondeur (b) des faces frontales (7) de 1 à 10 mm, de préférence de l'ordre de 3 à 5 mm.

3. Corps alvéolaire selon la revendication 1 ou 2,
caractérisé en ce que
les structures de renforcement supplémentaires sont des replis (9) des bords des couches de tôles (2, 3).

4. Corps alvéolaire selon l'une des revendications 1 à 3,
caractérisé en ce que
les tôles (2, 3) sont reliées entre elles par brasage, au moins au niveau d'une partie de leurs points de contact, et ce de préférence dans les zones des structures de renforcement supplémentaires (9).

5. Corps alvéolaire selon l'une quelconque des revendications précédentes, dans le cas duquel les extrémités d'une partie au moins des couches de tôles (2, 3) sont reliées à un tube d'enveloppe entourant le corps alvéolaire (1), de préférence soudées ou brasées,
caractérisé en ce que ces extrémités des tôles (2, 3) sont munies de structures de renforcement (8).

6. Corps alvéolaire selon la revendication 5,
caractérisé en ce que les extrémités des tôles (2, 3) reliées au tube d'enveloppe sont repliées (8) dans une zone de 1 à 10 mm, de préférence de l'ordre de 3 à 5 mm.

7. Corps alvéolaire selon l'une quelconque des revendications précédentes,
caractérisé en ce que
une partie au moins des tôles (2, 3) comporte, au moins dans des zones partielles, des microstructures (5, 6) en tant que structures de renforcement, qui ont de préférence une hauteur ou une profondeur de 10 à 50 µ, notamment des microstructures se croisant (6).

8. Corps alvéolaire selon l'une quelconque des revendications précédentes,
caractérisé en ce que
le corps alvéolaire comporte des couches de tôles lisses (2) d'une première épaisseur et des couches de tôles structurées (3) d'une deuxième épaisseur, toutes les couches de tôles structurées (3) étant plus minces d'au moins 5 µ, de préférence 10 µ, que les couches de tôles lisses (2).
